# EUROPÄISCHE PATENTANMELDUNG

(11) **EP 3 231 569 A1**
(43) Veröffentlichungstag der Anmeldung: **18.10.2017**
(21) Anmeldenummer: 17158287.7
(22) Anmeldetag: 28.02.2017
(51) Int. Cl.: B28B 7/34, B22F 5/00, B23P 15/24, B28B 7/46, B28B 13/06

(54) **PRESSFORM FÜR DACHZIEGEL**

(30) Priorität: 29.02.2016 AT 501522016
(71) Anmelder: Wienerberger AG, 1100 Wien (AT); Bioenergie Rhein-Ruhr, 48683 Ahaus (DE)
(72) Erfinder: RATH, Johannes, 2340 Mödling (AT)
(74) Vertreter: Gibler & Poth Patentanwälte KG

(57) **Zusammenfassung**

Bei einer Pressform (1,2) für Dachziegel, wobei die Pressform (1,2) eine Kontaktfläche (3) mit einem Negativprofil eines zu pressenden Dachziegels aufweist, wobei die Pressform (1,2) zumindest an der Kontaktfläche (3) zumindest teilweise aus einem offenporösen Material ausgebildet ist, wird vorgeschlagen, dass das offenporöse Material aus einem mit einem Bindemittel gebundenem Metallpulver besteht. Weiters wird ein Verfahren zum Herstellen der Pressform (1,2) und zum Pressen von Dachziegeln vorgeschlagen.

## Beschreibung

Die Erfindung betrifft eine Pressform für Dachziegel gemäß dem Oberbegriff des Patentanspruches 1.

Es sind Pressformen bekannt, welche zur Herstellung von Dachziegeln verwendet werden. Hierbei wird bei der Herstellung der Dachziegeln eine feuchte Masse, üblicherweise Lehm, Ton oder dergleichen, zwischen zwei Pressformen eingebracht, welche die Oberform und die Unterform ausbilden. Durch ein Schließen der beiden Pressformen wird die feuchte Masse in die durch die beiden Pressformen vorgegebene Form der Dachziegel gepresst. Für die Qualität der Dachziegel ist hierbei die Qualität der Pressformen und insbesondere die mit der feuchten Masse in Berührung kommende Kontaktfläche von großer Bedeutung, wobei die Pressform hohen Drücken ausgesetzt ist. Durch die hohen Drücke ist es auch vorteilhaft, wenn das Wasser aus der feuchten Masse beim Pressvorgang abfließen kann. Derartige Pressformen werden daher in der Regel als Gipsformen ausgeführt, welche gute Oberflächeneigenschaften aufweisen und auch ein Abführen des Wassers ermöglichen.

Nachteilig an bekannten Pressformen aus Gips ist, dass diese beim Pressen einem starken Abrieb ausgesetzt sind, wodurch derartige Pressformen üblicherweise häufig ausgetauscht werden müssen. Dieser häufige Austausch ist aufwendig und führt zu einem hohen Anteil an Standzeiten bei der Dachziegelpresse. Weiters weisen die vor und nach einem Austausch der Pressformen hergestellten Dachziegel eine geringe Qualität auf und müssen daher oft als Ausschuss verworfen werden. Weiters fällt eine hohe Menge an zu entsorgenden Gips an.

Aufgabe der Erfindung ist es daher eine Pressform der eingangs genannten Art anzugeben, mit welcher die genannten Nachteile vermieden werden können, welche die Pressung von Dachziegel in hoher Qualität und geringen Toleranzen ermöglicht, nur geringe Standzeiten der Dachziegelpresse verursacht und trotzdem einfach herzustellen ist.

Erfindungsgemäß wird dies durch die Merkmale des Patentanspruches 1 erreicht.

Dadurch ergibt sich der Vorteil, dass mit der Pressform Dachziegeln in hoher Qualität herstellbar sind, wobei die Pressform einfach herstellbar ist und eine hohe Haltbarkeit aufweist. Durch die hohe Haltbarkeit ist ein Austausch der Pressformen wesentlich seltener notwendig und die Dachziegel können über lange Zeit mit gleichbleibend hoher Qualität hergestellt werden. Durch das mit dem Bindemittel gebundene Metallpulver kann gut vorgebbar eine offenporöse Struktur geschaffen werden, welche eine ähnliche Abriebfestigkeit wie übliche Metallformen aufweist, wobei allerdings das Wasser aber auch Luft beim Pressvorgang einfach abgeführt werden kann, ohne dass eine aufwendige Konstruktion mit Kanälen notwendig ist. Weiters weist dieses offenporöse Material im Vergleich anderen offenporösen Materialien, wie beispielsweise gesinterten Materialien und Kunststoff, weiterhin eine hohe Duktilität auf, wodurch es gut in der Lage ist bruchfrei hohen Drücken zu widerstehen, ohne dass eine aufwendige Stützkonstruktion notwendig ist. Durch die offenporöse Oberfläche der Pressform an zumindest Teilen der Kontaktfläche kann der Dachziegel sauber aus der Pressform entformt werden. Das offenporöse Material kann weiters eine gute elektrische Leitfähigkeit aufweisen, wodurch das Entformen des Dachziegels aus der Pressform durch das Anlegen eines elektrischen Stromimpulses zusätzlich erleichtert werden kann.

Weiters ist ein Verfahren zum Herstellen einer Pressform gemäß dem Patentanspruch 11 vorgesehen.

Aufgabe der Erfindung ist es daher weiters ein Verfahren anzugeben, mit welchem eine Pressform einfach hergestellt werden kann.

Erfindungsgemäß wird dies durch die Merkmale des Patentanspruches 11 erreicht.

Dadurch ergibt sich der Vorteil, dass die Pressform auf einfach Weise mittels herkömmlichen abtragenden Fertigungsverfahren aus einem Stück des offenporösen Materials hergestellt werden kann, wodurch eine Pressform in der benötigten Kontur einfach vor Ort hergestellt werden kann, und nicht verschiedene Pressformen gelagert werden brauchen. Weiters können neue Pressformen für neu gestaltete Dachziegel schnell und einfach hergestellt werden, wodurch neue Arten an Dachziegeln ohne großem Umstellungsaufwand einfach produziert werden können. Hierbei hat sich herausgestellt, dass ein offenporöses Material bestehend aus einem mit Bindemittel gebundenem Metallpulver mittels eines abtragenden Fertigungsverfahrens leicht bearbeitbar ist und dennoch die Poren des offenporösen Materials nicht verschlossen werden.

Weiters ist ein Verfahren zum Pressen von Dachziegel gemäß dem Patentanspruch 12 vorgesehen.

Aufgabe der Erfindung ist es daher weiters ein Verfahren anzugeben, mit welchem Dachziegel in hoher Qualität und geringen Toleranzen bei geringen Standzeiten der Dachziegelpresse hergestellt werden können.

Erfindungsgemäß wird dies durch die Merkmale des Patentanspruches 12 erreicht.

Die Vorteile dieses Verfahrens entsprechen den bei der Pressform genannten Vorteilen.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossene Zeichnung, in welcher lediglich eine bevorzugte Ausführungsform beispielhaft dargestellt ist, näher beschrieben.

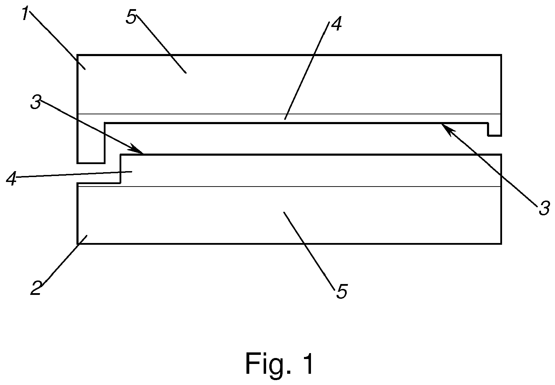

Dabei zeigt Fig. 1 zwei bevorzugte Ausführungsformen einer Pressform als Schnitt in Seitenansicht.

Die Fig. 1 zeigt bevorzugte Ausführungsformen einer Pressform 1,2 für Dachziegel, wobei die Pressform 1,2 eine Kontaktfläche 3 mit einem Negativprofil eines zu pressenden Dachziegels aufweist. Eine Pressform 1,2 ist ein Gegenstand welche dazu vorgesehen ist an einer Kontaktfläche 3 mit einem plastischen Körper, in diesem Fall einer feuchten Masse, in direkten Kontakt zu sein, und durch das Aufbringen einer Kraft, insbesondere ein Aufeinanderzubewegen zweier Pressformen 1,2 ein Negativprofil der Kontaktfläche 3 als Positivprofil auf den plastischen Körper abzuformen. Die Pressform 1,2 kann insbesondere als Stempel in einer Stempelpresse verwendet werden.

Die Pressform 1,2 ist vorgesehen für die Herstellung von Dachziegel verwendet zu werden. Ein Dachziegel ist bevorzugt ein aus Ton oder tonigen Massen gebrannter Formteil zum Dachdecken, die in der Regel mit einer angesetzten Nase an der Dachlatte angehängt werden. Durch Pressen, insbesondere Stempelpressen, hergestellte Dachziegel werden auch als Pressziegel bezeichnet. Derartige Dachziegel können unterschiedliche Formen aufweisen. Bekannte Beispiele derartiger Dachziegel sind Falzziegel, Reformpfannen, Falzpfannen, Flachdachpfannen und Krempziegel.

Zum Pressen können insbesondere zwei Pressformen 1,2 vorgesehen sein, wobei insbesondere eine erste Pressform 1 als Oberform und eine zweite Pressform 2 als Unterform verwendet werden kann. In einem geschlossen Zustand umschließen die beiden Pressformen 1,2, bevorzugt komplett, einen durch die Kontaktflächen 3 begrenzten Hohlraum, wobei die Kontur des Hohlraumes der Kontur des zu pressenden Dachziegels entspricht. Durch das Negativprofil der beiden Kontaktflächen 3 wird die Kontur des Hohlraumes vorgegeben. Eine in diesem Hohlraum angeordnete plastische feuchte Masse, insbesondere Ton oder tonhaltiges Material, wird dadurch in die vorgegebene Form eines Dachziegels gepresst. In der Fig. 1 ist der Schnitt durch zwei Pressformen 1,2 gemäß einer bevorzugten Ausführungsform mit stark vereinfacht dargestellter Kontur als Schnitt in der Seitenansicht dargestellt.

Vorgesehen ist, dass die Pressform 1,2 zumindest an der Kontaktfläche 3 zumindest teilweise aus einem offenporösen Material ausgebildet ist. Ein offenporöses Material ist ein von einem Netz aus Poren durchzogenes Material, wobei die Poren zu einer Oberfläche des offenporösen Materials hin offen sind. Das offenporöse Material ist daher von einem Fluid durchfließbar. Die Pressform 1,2 kann insbesondere an der gesamten Kontaktfläche 3 aus dem offenporösen Material ausgebildet sein. Durch das offenporöse Material kann das Wasser aus der feuchten Masse aber auch Luft beim Pressvorgang durch die Pressform 1,2 hindurch abgeführt werden.

Weiters ist vorgesehen, dass das offenporöse Material aus einem mit einem Bindemittel gebundenem Metallpulver besteht. Als Metallpulver wird ein Pulver aus einem Metall bezeichnet, wobei dieses Metall Reinmetalle oder Legierungen von Metallen sein können. Hierbei wird das offenporöse Material durch ein Metallpulver gebildet, wobei der Zwischenraum zwischen einzelnen Pulverkörnern des Metallpulvers ein zusammenhängendes Netz aus Poren ausbildet. Die einzelnen Pulverkörner des Metallpulvers sind mittels des Bindemittels miteinander verklebt, wobei das Bindemittel nur einen Teil des Zwischenraumes zwischen den einzelnen Pulverkörnern des Metallpulvers ausfüllt, sodass das zusammenhängende Netz aus Poren weiterhin gegeben ist. Durch das mit dem Bindemittel gebundene Metallpulver kann daher eine offenporöse Struktur aus Metall geschaffen werden, welche durch die Verwendung von Bindemittel für den Zusammenhalt der einzelnen Pulverkörner eine hohe Duktilität aufweist. Weiters ist ein derartiges Material wesentlich günstiger in der Herstellung als ein gesintertes Metall.

Weiters ist ein Verfahren zum Pressen von Dachziegel vorgesehen, wobei eine feuchte Masse zwischen zwei, jeweils eine Kontaktfläche 3 mit dem Negativprofil des zu pressenden Dachziegels aufweisenden, Pressformen 1,2 eingebracht wird, wobei zumindest eine der Pressformen 1,2 zumindest an der Kontaktfläche 3 zumindest teilweise aus dem offenporösen Material bestehend aus dem mit dem Bindemittel gebundenem Metallpulver ausgebildet ist, wobei bei einem Pressvorgang die feuchte Masse durch die zwei Pressformen 1,2 zu einem Dachziegel gepresst wird und dabei Wasser aus der feuchten Masse durch das offenporöse Material hindurch abgeführt wird. Durch das offenporöse Material kann weiters auch, in der feuchten Masse enthaltene und/oder durch das Einbringen der feuchten Masse in die Pressformen 1,2 eingeschlossene, Luft über die Kontaktfläche 3 abgeführt werden.

Dadurch ergibt sich der Vorteil, dass mit der Pressform Dachziegeln 1,2 in hoher Qualität herstellbar sind, wobei die Pressform 1,2 einfach herstellbar ist und eine hohe Haltbarkeit aufweist. Durch die hohe Haltbarkeit ist ein Austausch der Pressformen 1,2 wesentlich seltener notwendig und die Dachziegel können über lange Zeit mit gleichbleibend hoher Qualität hergestellt werden. Durch das mit dem Bindemittel gebundene Metallpulver kann gut vorgebbar eine offenporöse Struktur geschaffen werden, welche eine ähnliche Abriebfestigkeit wie übliche Metallformen aufweist, wobei allerdings das Wasser aber auch Luft beim Pressvorgang einfach abgeführt werden kann, ohne dass eine aufwendige Konstruktion mit Kanälen notwendig ist. Weiters weist dieses offenporöse Material im Vergleich anderen offenporösen Materialien, wie beispielsweise gesinterten Materialien und Kunststoff, weiterhin eine hohe Duktilität auf, wodurch es gut in der Lage ist bruchfrei hohen Drücken zu widerstehen, ohne dass eine aufwendige Stützkonstruktion notwendig ist. Durch die offenporöse Oberfläche der Pressform 1,2 an zumindest Teilen der Kontaktfläche kann der Dachziegel sauber aus der Pressform 1,2 entformt werden. Das offenporöse Material kann weiters eine gute elektrische Leitfähigkeit aufweisen, wodurch das Entformen des Dachziegels aus der Pressform 1,2 durch das Anlegen eines elektrischen Stromimpulses zusätzlich erleichtert werden kann.

Weiters kann eine Dachziegelpresse umfassend eine Oberform und eine Unterform vorgesehen, wobei die Oberform und die Unterform, insbesondere mittels einer Hydraulik und/oder Mechanik, aufeinander zubewegbar sind, wobei die Oberform und/oder die Unterform als Pressform 1,2 ausgebildet ist, welche zumindest an der Kontaktfläche 3 zumindest teilweise aus einem offenporösen Material bestehend aus einem mit Bindemittel gebundenem Metallpulver ausgebildet ist.

Gemäß einer nicht dargestellten Ausführungsform kann vorgesehen sein, dass lediglich eine der beiden Pressformen 1,2, insbesondere die als Unterform ausgebildete zweite Pressform 2, das offenporöse Material bestehend aus dem mit Bindemittel gebundenem Metallpulver umfasst, da es bereits ausreichend sein kann, wenn das Wasser über eine der beiden Pressformen 1,2 abgeführt werden kann.

Bevorzugt kann vorgesehen sein, dass sowohl die als Oberform ausgebildete erste Pressform 1 als auch die als zweite Pressform 2 ausgebildete Unterform das offenporöse Material bestehend aus dem mit Bindemittel gebundenem Metallpulver umfasst, damit das Wasser im Wesentlichen von allen Seiten abgeführt werden kann.

Beim und/oder vor dem Pressvorgang kann an dem offenporösen Material ein Unterdruck angelegt werden, um das Abführen des Wassers zu beschleunigen.

Weiters kann vorgesehen sein, dass bei einem dem Pressvorgang anschließenden Entformungsvorgang das offenporöse Material einem elektrischen Stromimpuls ausgesetzt wird. Durch derartige Stromimpulse kann ebenfalls ein Lösen der gepressten feuchten Masse von der Kontaktfläche 3 unterstützt werden.

Insbesondere kann vorgesehen sein, dass das offenporöse Material ein elektrischer Leiter ist, also insbesondere einen hohen elektrischen Leitwert aufweist, sodass das offenporöse Material den Stromimpuls zu der Kontaktfläche 3 weiterleitet. Dieser hohe elektrische Leitwert kann insbesondere dadurch erreicht werden, dass sich die einzelnen Pulverkörner des Metallpulvers gegenseitig derart berühren, dass das offenporöse Material makroskopisch einen elektrischen Leiter ausbildet.

Weiters kann vorgesehen sein, dass bei dem Entformungsvorgang Druckluft in das offenporöse Material eingeblasen wird, um ein Lösen der gepressten feuchten Masse von der Kontaktfläche 3 zu unterstützen.

Nach dem Entformungsvorgang kann der gepresste Dachziegel insbesondere wie üblich gebrannt werden.

Weiters ist ein Verfahren zum Herstellen der Pressform 1,2 vorgesehen, wobei aus einem Stück eines offenporösen Materials bestehend aus einem mit Bindemittel gebundenem Metallpulver die Pressform 1,2 mittels eines abtragenden Fertigungsverfahrens ausgebildet wird. Als abtragende Fertigungsverfahren können insbesondere zerspanende Fertigungsverfahren verwendet werden, insbesondere Fräsen, besonders bevorzugt mittels einer CNC-Fräse. Alternativ können auch andere abtragende Fertigungsverfahren wie Funkenerodieren oder Schneideverfahren wie Wasserstrahlschneiden verwendet werden. Hierbei kann das offenporöse Material insbesondere als Blöcke von Rohlingen vorliegen, aus welchen durch das abtragende Fertigungsverfahren die vorgegebenen Konturen herausgearbeitet werden. Bei dem abtragenden Fertigungsverfahren kann insbesondere das Negativprofil in die Kontaktfläche 3 ausgearbeitet werden.

Dadurch ergibt sich der Vorteil, dass die Pressform 1,2 auf einfach Weise mittels herkömmlichen abtragenden Fertigungsverfahren aus einem Stück des offenporösen Materials hergestellt werden kann, wodurch eine Pressform 1,2 in der benötigten Kontur einfach vor Ort hergestellt werden kann, und nicht verschiedene Pressformen 1,2 gelagert werden brauchen. Weiters können neue Pressformen 1,2 für neu gestaltete Dachziegel schnell und einfach hergestellt werden, wodurch neue Arten an Dachziegeln ohne großem Umstellungsaufwand einfach produziert werden können. Hierbei hat sich herausgestellt, dass ein offenporöses Material bestehend aus einem mit Bindemittel gebundenem Metallpulver mittels eines abtragenden Fertigungsverfahrens leicht bearbeitbar ist und dennoch die Poren des offenporösen Materials nicht verschlossen werden.

Das offenporöse Material kann dadurch hergestellt werden, dass ein Gemisch aus dem Metallpulver und dem Bindemittel unter Druck und Hitze gepresst wird, bis das Bindemittel die einzelnen Pulverkörner des Metallpulvers miteinander verklebt.

Das offenporöse Material kann insbesondere ein Verbundmaterial, dessen Eigenschaften einerseits durch das verwendete Metallpulver als auch durch das Bindemittel vorgegeben werden.

Besonders bevorzugt kann vorgesehen sein, dass die gesamte Pressform 1,2 aus dem offenporösen Material ausgebildet ist. Hierbei kann die gesamte Pressform, insbesondere einstückig, aus dem offenporösen Material ausgebildet sein, wodurch die Pressform 1,2 einfach aus einem Stück des offenporösen Materials hergestellt werden kann.

Weiters kann vorgesehen sein, dass das offenporöse Material eine Dicke von mindesten 1 mm, insbesondere mindesten 5 mm, bevorzugt mindesten 10 mm, aufweist. Die Dicke ist insbesondere die Erstreckung in Richtung der Pressbewegung zu messen. Die Dicke kann weiters bevorzugt die Dicke des offenporösen Materials an der Kontaktfläche 3 sein. Durch eine derart hohe Dicke kann das Wasser gut seitlich in dem offenporösen Material ausbreiten.

Wenn die gesamte Pressform 1,2 aus dem offenporösen Material ausgebildet ist entspricht die Dicke des offenporösen Materials der Dicke der Pressform 1,2.

Weiters kann vorgesehen sein, dass das offenporöse Material eine Dicke von maximal 1000 mm, insbesondere maximal 100 mm, bevorzugt maximal 20 mm, aufweist. Durch eine derart kleine Dicke kann gut eine Formstabilität der Pressform 1,2 beim Pressvorgang gewährleistet werden.

Insbesondere kann vorgesehen sein, dass das offenporöse Material einen Porendurchmesser von 1 µm bis 100 µm aufweist. Bei einem derart dimensionierten Metallpulver hat das offenporöse Material eine feine Mikrostruktur, welche zu einer glatten Oberfläche des Dachziegels führt. Weiters wird die Gefahr verringert, dass Fremdkörper in die Poren des offenporösen Materials eindringen und diese verschließen.

Das Metallpulver kann insbesondere aus Pulverkörnern mit einem Durchmesser von 5 µm bis 200 µm bestehen.

Besonders bevorzugt kann vorgesehen sein, dass das Bindemittel ein Kunststoff, insbesondere ein Kunstharz, ist. Ein derartiges Bindemittel sorgt für eine elastische Verbindung zwischen den Pulverkörnern des Metallpulvers, wodurch auch das offenporöse Material sehr gute duktile Eigenschaften aufweist. Weiters sind derartige Stoffe chemisch oftmals sehr beständig, wodurch das mit Wasser in Berührung kommende offenporöse Material nicht verrottet oder die Bindung der Pulverkörner mit der Zeit gelöst wird.

Das durch das Bindemittel gebundene Metallpulver hat unter anderem den Vorteil, dass eine Vielzahl von Metallen, insbesondere Metalllegierungen, als Metallpulver verwendet werden können.

Das Metallpulver kann insbesondere aus mehreren Metallsorten oder Legierungen bestehen, welche durchmischt sind. Dadurch können die Eigenschaften des offenporösen Materials einfach durch eine kontrollierte Mischung verschiedener Metalle gezielt verändert werden.

Insbesondere kann vorgesehen sein, dass das Metallpulver aus einem nicht rostenden Metall ist. Dadurch kann verhindert werden, dass die Poren in dem offenporösen Material durch Rost verschlammen.

Besonders bevorzugt kann vorgesehen sein, dass das Metallpulver einen Stahl, insbesondere einen Edelstahl, beinhaltet. Hierbei hat sich gezeigt, dass Stahl, insbesondere Edelstahl, für diesen Zweck sehr gute Eigenschaften aufweist und dabei sehr wirtschaftlich ist. Dadurch kann die Pressform eine ähnlich hohe Abriebfestigkeit wie herkömmliche Stahlformen aufweisen, wobei weiterhin die Porosität gegeben ist.

Die Härte des offenporösen Materials kann insbesondere mittels dynamischen Härteprüfverfahren bestimmt werden.

Insbesondere kann vorgesehen sein, dass das offenporöse Material eine Härte nach Shore-D von mindestens 85, bevorzugt mindestens 90, insbesondere mindestens 95, aufweist. Durch diese hohe Härte behält das offenporöse Material und damit auch die Pressform 1,2 auch bei hohen Drücken im Pressvorgang zuverlässig seine Form, wodurch geringe Toleranzen bei den gefertigten Dachziegeln möglich sind.

Weiters kann vorgesehen sein, dass das offenporöse Material eine Biegefestigkeit größer als 35 N/mm² aufweist. Die Biegefestigkeit kann insbesondere mittels eines 3-Punkt-Biegeversuchs gemessen werden.

Weiters kann vorgesehen sein, dass das offenporöse Material eine Dichte höher 2,0 kg/l, insbesondere höher 3,0 kg/l, aufweist. Die Dichte ist hierbei die Dichte des gesamten Volumens des offenporösen Materials. Die Dichte entspricht bevorzugt im Wesentlichen der spezifischen Dichte des Metallpulvers multipliziert mit dem Anteil des Volumens des Metallpulvers am Gesamtvolumen.

Insbesondere kann vorgesehen sein, dass das offenporöse Material makroskopisch homogen ist, also im Wesentlichen über das gesamte Volumen betrachtet im Wesentlichen die gleichen Eigenschaften aufweist. Makroskopisch homogen bedeutet hierbei, dass die Homogenität makroskopisch betrachtet gegeben ist aber nicht zwingend im mikroskopischen, wo sich Metallpulver, Bindemittel und Poren abwechseln. Vorteilhaft daran ist, dass bei einer abtragenden Bearbeitung des offenporösen Materials die Eigenschaften der Oberfläche im Wesentlichen gleich bleiben, insbesondere die offene Porosität weiterhin gegeben bleibt.

Insbesondere kann vorgesehen sein, dass die Pressform 1,2 makroskopisch ein Vollmaterial darstellt, welches frei von Durchbrechungen oder makroskopischen Kanälen ist.

Das aus einem mit Bindemittel gebundenem Metallpulver bestehend offenporösen Material ermöglicht weiters einen einstückigen Aufbau mit Schichten mit unterschiedlichen Eigenschaften, welcher dadurch entstehen kann, das bei der Herstellung des offenporösen Materials verschiedene Metallpulver in nicht durchmischten Schichten aufgebracht werden, bevor diese mit dem Bindemittel gebunden werden.

Besonders bevorzugt kann vorgesehen sein, dass die Pressform 1,2 mindestens zwei Schichten 4,5 des offenporösen Materials aufweist, wobei eine erste Schicht 4 an der Kontaktfläche 3 angeordnet ist und eine zweite Schicht 5 an einer der Kontaktfläche 3 abgewandten Seite der ersten Schicht 4 angeordnet ist, wobei das Metallpulver in der ersten Schicht 4 aus einem Metall höherer Härte ist als das Metallpulver in der zweiten Schicht 5. Vorteilhaft daran ist, dass die Pressform 1,2 an der Kontaktfläche 3 ein offenporöses Material mit hochwertigen und daher teurem Metallpulver von besonders hoher Härte, und damit besonders geringem Abrieb, aufweisen kann, wobei das restliche offenporöse Material ein Metallpulver aufweist, welche geringere Anforderungen an die Härte hat, und daher auch günstiger sein kann. Ein derartiger Aufbau der Pressform 1,2 ist in der Fig. 1 beispielhaft dargestellt.

Die Härte des Metalls des Metallpulvers bezieht sich dabei auf die Härte, welche das Metall des entsprechenden Metallpulvers als solider Körper hätte. Die Härte kann insbesondere die Vickers-Härte sein, welche beispielsweise mittels Mikrohärtemessung direkt an den Pulverkörnern bestimmt werden kann oder an einen Prüfkörper aus dem Metall des entsprechenden Metallpulvers.

Die Härte eines Metallpulvers aus Stahl kann insbesondere durch den Kohlenstoffgehalt des Stahls oder der Beimengung von weiteren Legierungsbestandteilen gut vorgegeben werden.

## Patentansprüche

1. Pressform (1,2) für Dachziegel, wobei die Pressform (1,2) eine Kontaktfläche (3) mit einem Negativprofil eines zu pressenden Dachziegels aufweist, wobei die Pressform (1,2) zumindest an der Kontaktfläche (3) zumindest teilweise aus einem offenporösen Material ausgebildet ist, **dadurch gekennzeichnet, dass** das offenporöse Material aus einem mit einem Bindemittel gebundenem Metallpulver besteht.

2. Pressform (1,2) nach Anspruch 1, **dadurch gekennzeichnet, dass** die gesamte Pressform (1,2) aus dem offenporösen Material ausgebildet ist.

3. Pressform (1,2) nach Anspruch 1 oder 2, **dadurch gekennzeichnet, dass** das Bindemittel ein Kunststoff, insbesondere ein Kunstharz, ist.

4. Pressform (1,2) nach einem der Ansprüche 1 bis 3, **dadurch gekennzeichnet, dass** das Metallpulver einen Stahl, insbesondere einen Edelstahl, beinhaltet.

5. Pressform (1,2) nach einem der Ansprüche 1 bis 4, **dadurch gekennzeichnet, dass** die Pressform (1,2) mindestens zwei Schichten (4,5) des offenporösen Materials aufweist, wobei eine erste Schicht (4) an der Kontaktfläche (3) angeordnet ist und eine zweite Schicht (5) an einer der Kontaktfläche (3) abgewandten Seite der ersten Schicht (4) angeordnet ist, wobei das Metallpulver in der ersten Schicht (4) aus einem Metall höherer Härte ist als das Metallpulver in der zweiten Schicht (5).

6. Pressform (1,2) nach einem der Ansprüche 1 bis 5, **dadurch gekennzeichnet, dass** das offenporöse Material eine Dicke von mindesten 1 mm, insbesondere mindesten 5 mm, bevorzugt mindesten 10 mm, aufweist.

7. Pressform (1,2) nach einem der Ansprüche 1 bis 6, **dadurch gekennzeichnet, dass** das offenporöse Material eine Dicke von maximal 1000 mm, insbesondere maximal 100 mm, bevorzugt maximal 20 mm, aufweist.

8. Pressform (1,2) nach einem der Ansprüche 1 bis 7, **dadurch gekennzeichnet, dass** das offenporöse Material einen Porendurchmesser von 1 µm bis 100 µm aufweist.

9. Pressform (1,2) nach einem der Ansprüche 1 bis 8, **dadurch gekennzeichnet, dass** das offenporöse Material eine Dichte höher 2,0 kg/l aufweist.

10. Pressform (1,2) nach einem der Ansprüche 1 bis 9, **dadurch gekennzeichnet, dass** das offenporöse Material eine Härte nach Shore-D von mindestens 85 aufweist.

11. Verfahren zum Herstellen einer Pressform (1,2), insbesondere nach einem der Ansprüche 1 bis 10, wobei aus einem Stück eines offenporösen Materials bestehend aus einem mit Bindemittel gebundenem Metallpulver die Pressform (1,2) mittels eines abtragenden Fertigungsverfahrens ausgebildet wird.

12. Verfahren zum Pressen von Dachziegel, wobei eine feuchte Masse zwischen zwei, jeweils eine Kontaktfläche (3) mit einem Negativprofil des zu pressenden Dachziegels aufweisenden, Pressformen (1,2) eingebracht wird, wobei zumindest eine der Pressformen (1,2) zumindest an der Kontaktfläche (3) zumindest teilweise aus einem offenporösen Material bestehend aus einem mit Bindemittel gebundenem Metallpulver ausgebildet ist, wobei bei einem Pressvorgang die feuchte Masse durch die zwei Pressformen (1,2) zu einem Dachziegel gepresst wird und dabei Wasser aus der feuchten Masse durch das offenporöse Material hindurch abgeführt wird.

13. Verfahren nach Anspruch 12, **dadurch gekennzeichnet, dass** bei einem dem Pressvorgang anschließenden Entformungsvorgang das offenporöse Material einem elektrischen Stromimpuls ausgesetzt wird.
